(19) Europäisches Patentamt
European Patent Office
Office européen des brevets

(11) EP 1 606 894 B1

(12) **EUROPEAN PATENT SPECIFICATION**

(45) Date of publication and mention of the grant of the patent:
**07.11.2007 Bulletin 2007/45**

(21) Application number: **04717298.6**

(22) Date of filing: **04.03.2004**

(51) Int Cl.:
***H04B 10/17*** *(2006.01)* ***H04B 10/18*** *(2006.01)*

(86) International application number:
**PCT/JP2004/002777**

(87) International publication number:
**WO 2004/079951 (16.09.2004 Gazette 2004/38)**

# (54) OPTICAL TRANSMISSION SYSTEM

OPTISCHES ÜBERTRAGUNGSSYSTEM

SYSTEME DE TRANSMISSION OPTIQUE

(84) Designated Contracting States:
**DE DK FR GB IT SE**

(30) Priority: **04.03.2003 JP 2003057575**
**26.02.2004 JP 2004052228**

(43) Date of publication of application:
**21.12.2005 Bulletin 2005/51**

(73) Proprietor: **Sumitomo Electric Industries, Ltd.**
**Osaka-shi,**
**Osaka 541-0041 (JP)**

(72) Inventors:
- **MIYAMOTO, Toshiyuki**
  **Yokohama-Shi,**
  **Kanagawa 244-8588 (JP)**
- **TANAKA, Masato**
  **Yokohama-Shi,**
  **Kanagawa 244-8588 (JP)**
- **OKUNO, Toshiaki**
  **Yokohama-Shi,**
  **Kanagawa 244-8588 (JP)**
- **KOBAYASHI, Junko**
  **Yokohama-Shi,**
  **Kanagawa 244-8588 (JP)**
- **SHIGEMATSU, Masayuki**
  **Yokohama-Shi,**
  **Kanagawa 244-8588 (JP)**
- **NISHIMURA, Masayuki**
  **Yokohama-shi,**
  **Kanagawa 244-8588 (JP)**

(74) Representative: **HOFFMANN EITLE**
**Patent- und Rechtsanwälte**
**Arabellastrasse 4**
**81925 München (DE)**

(56) References cited:
**WO-A-03/014773**
**US-A- 5 587 827**
**US-A1- 2002 076 182**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Technical Field

The present invention relates to an optical transmission system having a structure for Raman-amplifying signal light, specifically a wavelength division multiplexing (WDM) optical transmission system.

### Background Art

An optical transmission system is constituted by an optical transmitter, an optical receiver, and an optical fiber transmission line provided between the optical transmitter and the optical receiver and transmitting from the optical transmitter toward the optical receiver, and thereby enabling a high speed transmission and reception of large capacity information. Also, it is general that the optical transmission system comprises an optical amplifier for amplifying signal light because the power of the signal light decreases while it propagates through the optical fiber transmission line. When a Raman amplifier is applied as an optical amplifier, it can amplify signal light with an arbitrary wavelength band by supplying pumping light with a suitable wavelength, and can make a wide and flat gain band of optical amplification.

In addition, the signal light source included in the optical transmitter includes, for example, a laser diode, and outputs signal light by directly modulating the laser diode. Thus the signal light outputted from directly modulated laser diode has a positive chirp. The technology for compensating for the positive chirp of this signal is disclosed in the document: J. Jeong, et al., IEEE Photonics Technology Letters, Vol.10, No.9 (1998). Namely, the optical transmission system disclosed in the document compensates for the positive chirp of the signal light propagating through the optical fiber transmission line by using a self-phase modulation (SPM) as nonlinear optical phenomena in the optical fiber transmission line. In this method, a transmission characteristic in the optical transmission system can be improved by compensating for the positive chirp of the signal light outputted from the signal light source.

An optical transmission system comprising features a), b), c) in accordance with the preamble of claim 1 is known from US 2002/076182 A1. Furthermore, in US-A-5 587 827 it is disclosed that a positive chirp can be employed in a transmission line similar to that disclosed in US 2002/076182 A1.

### Disclosure of the Invention

The inventors have studied conventional optical communication systems in detail, and as a result, have found problems as follows. Namely, the conventional optical system disclosed in the above document compensates for the positive chirp of the signal light by using the self-phase modulation generated in the optical fiber transmission line, but a medium that generates a self-phase modulation is limited to the optical fiber transmission line. Therefore, the transmission characteristics in the optical transmission system cannot be sufficiently improved.

In addition, in the conventional optical transmission system disclosed in the above document, a rare-earth doped optical fiber amplifier is disposed on a signal light-propagating path. However, since the amplification band of rare-earth doped optical fiber amplifier is limited by a bandwidth of a fluorescence spectrum of the rare-earth material, it is difficult to apply to the optical transmission system disclosed in the above document to CWDM (Course Wavelength Division Multiplexing) optical transmission whose signal channel spacing is set to a comparatively large.

The present invention has been completed so as to solve the above problems, and has an object to provide an optical transmission system that has a structure to enable a signal transmission while maintaining superior transmission characteristics over a broader wavelength band. This object is solved by claim 1.

The optical transmission system according to the present invention is a wavelength division multiplexing (WDM) optical transmission system transmitting signal light of a plurality of channels with different wavelengths and Raman-amplifying the signal light, and comprises: a directly-modified signal light source outputting signal light with a positive chirp; an optical fiber transmission line transmitting the signal light therethrough; and a lumped Raman amplifier arranged between the signal light source and the optical fiber transmission line. In particular, the lumped Raman amplifier includes, as a Raman amplification fiber, a high-nonlinearity fiber for compensating for the positive chirp of the signal light, and the high-nonlinearity fiber has a negative chromatic dispersion and a nonlinear coefficient $(2\pi/\lambda)\cdot(n_2/A_{eff})$ of 6.9 (1/W/km) or more which is defined by a nonlinear refractive index $n_2$ and an effective area $A_{eff}$ at a signal wavelength $\lambda$. Accordingly, in the optical transmission system, the signal light outputted from the signal light source propagates through the optical transmission line after passing through the lumped Raman amplifier.

The positive chirp of the signal light outputted from the signal light source is compensated by the high-nonlinearity fiber as a Raman amplification fiber (having a negative chromatic dispersion at the wavelength of the signal light), and is compensated by self-phase modulation (SPM) in the high-nonlinearity fiber. By employing these effects, the optical transmission system according to the present invention can obtain superior transmission characteristics over the wide wavelength band.

In addition, in the optical transmission system according to the present invention, it is preferable that a phase shift amount $\Phi_{LRA}$ of the signal light in the high-nonlinearity fiber is 1/2 or more of the phase shift amount $\Phi_T$ of the signal light in the optical fiber transmission channel. In this case, a compensation effect for the positive chirp of the signal light, to which the self-phase modulation caused in the high-nonlinearity fiber contributes, becomes large.

In the optical transmission system according to the present invention, the nonlinear coefficient $(2\pi/\lambda) \cdot (n_2/A_{eff})$ of the high-nonlinear fiber is preferably 12.2 (1/W/km) or more. In this case, a compensation effect for the positive chirp of the signal light, to which the self-phase modulation caused in the high-nonlinearity fiber contributes, becomes large.

In the optical transmission system according to the present invention, the high-nonlinearity fiber preferably has a transmission loss of 0.7 dB/km or less at the wavelength of 1550 nm. In this case, due to a small transmission loss at the wavelength of the signal light, Raman amplification can be achieved with high efficiency in the high-nonlinearity fiber.

In the optical transmission system according to the present invention, the high-nonlinearity fiber preferably has a transmission loss whose increase, to which OH-absorption near a wavelength of 1390 nm contributes, is 0.5 dB/km or less. In this case, since a transmission loss at a wavelength of pumping light, Raman amplification can be achieved with high efficiency in the high-nonlinearity fiber.

In addition, in the optical transmission system according to the present invention, the high-nonlinearity fiber preferably has a chromatic dispersion of -20 ps/nm/km or less at the wavelength of the signal light. In this case, a compensation effect for the positive chirp of the signal light, to which a negative chromatic dispersion of the high-nonlinearity fiber contributes, becomes large.

Furthermore, in the optical transmission system according to the present invention, the wavelength spacing between signal channels included in the signal light is preferably 10 nm or more, and the high-nonlinearity fiber as a Raman amplification fiber preferably has a chromatic dispersion of -10 ps/nm/km or less at the wavelength of the signal light. In this case, the generation of a four-wave mixing or a cross-phase modulation (XPM), as nonlinear optical phenomenon can be effectively suppressed, and thereby superior transmission characteristics can be obtained. In addition, the optical transmission system can be used to the CWDM (Course Wavelength Division Multiplexing) optical communication having wider signal channel spacing.

The present invention will be more fully understood from the detailed description given hereinbelow and the accompanying drawings, which are given by way of illustration only and are not to be considered as limiting the present invention.

Hereinafter the invention will be described in detail with reference to the drawings.

## Brief Description of the Drawings

Fig. 1 is a view showing a constitution of one embodiment of an optical transmission system according to the present invention;

Fig. 2 is view showing a constitution of a lumped Raman amplifier in the optical transmission system shown in Fig. 1;

Fig. 3 is a view showing a constitution of an experimental system that has been prepared to confirm an effect of the optical transmission system according to the present invention;

Fig. 4 is a graph showing an experiment result with an experimental system shown in Fig. 3;

Fig. 5 is a graph showing a distribution of signal light power $P_{signal}$ on a signal light transmission path in the optical transmission system shown in Fig. 1;

Fig.6 is a table listing specifications of the Raman amplification fiber 130 and the transmission fiber 30 included in the optical transmission system shown in Fig. 1;

Fig. 7 shows an inputted light spectrum S1 and an outputted light spectrum S2 of the lumped Raman amplifier in the optical transmission system shown in Fig. 1; and

Fig. 8 is a graph in which the relationships between bit error rate (BER) and receiving power (dBm) are plotted, regarding to the signal light with a wavelength of 1550 nm in various transmission lines.

## Best Modes for Carrying Out the Invention

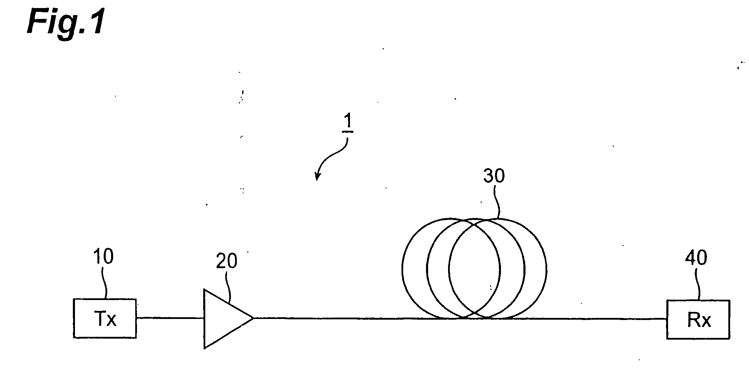

In the following, embodiments of the optical transmission system according to the present invention will be explained in detail with reference to Figs. 1 to 8. In the explanation of the drawings, constituents identical to each other will be referred to with numerals identical to each other without repeating their overlapping descriptions.

Fig. 1 is a view showing a constitution of one embodiment of an optical transmission system according to the present invention. The optical transmission system shown in Fig. 1 comprises a signal light source 10, a lumped Raman amplifier 20, a transmission fiber 30 as an optical fiber transmission line, and an optical receiver 40. The signal source 10 includes a laser diode, and signal light having a positive chirp is outputted therefrom by directly-modulating the laser diode. The signal light from the signal light source 10 is inputted into the lumped Raman amplifier 20. And then the amplified light is outputted from the Raman-amplifier. The transmission fiber 30 transmits the signal light outputted from the lumped Raman amplifier 20 to the optical receiver 40. In addition, the optical receiver 40 receives the signal light having propagating through the transmission fiber 30.

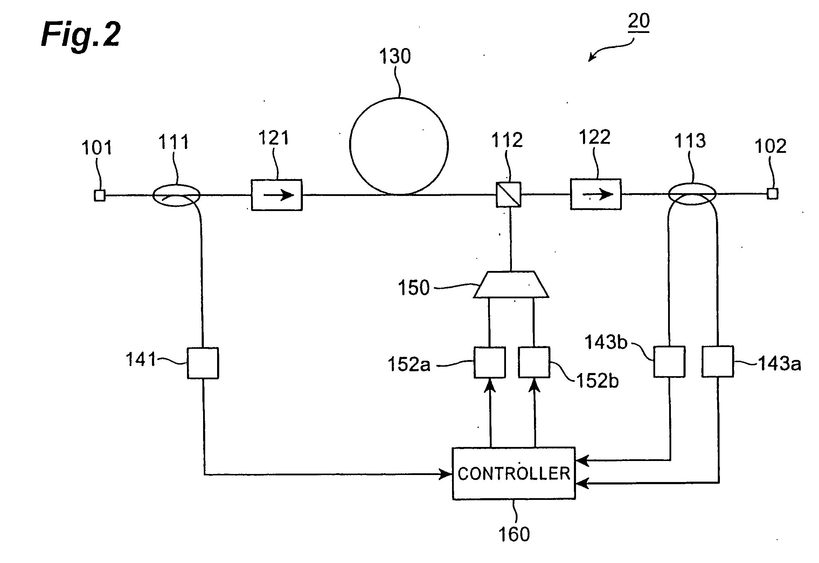

Fig. 2 is a view showing a constitution of the lumped Raman amplifier 20 in the optical transmission system shown in Fig. 1. The lumped Raman amplifier 20 shown in Fig. 2 Raman-amplifies the signal light inputted through the signal input port 101, and outputs the Raman-amplified signal light through the signal output port 102. The lumped Raman amplifier 20 comprises an optical coupler 111, an optical isolator 121, a Raman amplification fiber 130, an optical coupler 112, an optical isolator 122, and an optical coupler 113, arranged on a signal light propagation path in the order from the signal input port 101 toward the signal output port 102. In addition, the lumped Raman amplifier 20 further comprises a photo diode 141 connected to the optical coupler 111, photo diodes 143a, 143b connected to the optical coupler 113, an optical multiplexer 150 connected to the optical coupler 112, laser diodes 152a, 152b connected to the optical multiplexer 150, and a controller 160 controlling the amplifying operation of the lumped Raman amplifier 20.

The optical coupler 111 outputs a part of the signal light inputted through the signal input port 101, and outputs the rest of the signal light to the optical isolator 121. The photo diode 141 receives the signal light after the optical coupler 111, and outputs electric signal depending on input signal light power to the controller 160.

The optical coupler 113 outputs a part of the signal light after the optical isolator 122 into the photo diode 143a, and outputs the rest of the signal light to the signal output port 102. The photo diode 143a receives the signal light after the optical coupler 113, and outputs electric signal depending on output signal light power to the controller 160. In addition, the optical coupler 113 outputs a part of the light after the signal output port 102 into the photo diode 143b, and outputs the rest of the signal light to the optical isolator 122. The photo diode 143b receives of the light arrived from the optical coupler 113, and outputs an electric signal depending on the light power to the controller 160.

The optical coupler 112 enters pumping light outputted from the optical multiplexer 150, and supplies the pumping light to the Raman amplification fiber 130. In addition, the optical coupler 112 enters the signal light outputted from the Raman amplification fiber 130, and outputs the signal light to the optical isolator 122.

The optical isolator 121, 122 pass the light propagating in a forward direction from the signal input port 101 to the signal output port 102, but do not pass the light propagating in a backward direction.

The laser diodes 152a, 152b are respectively optical devices, and the wavelength of pumping light components outputted from the laser diodes 152a, 152b are different from each other. Each of the laser diode 152a, 152b is preferably constitutes an outer resonator together with a fiber grating. In this case, pumping light with a stable wavelength can be outputted. Also, by using two laser diodes each outputting pumping light with a same wavelength, a structure in which pumping light components outputted from these two laser diodes are polarization multiplexed may be allowed. In this case, a pumping light power can be increased. The optical multiplexer 150 multiplexes the pumping light components outputted from the laser diodes 152a, 152b, and outputs the multiplexed pumping light to the optical coupler 112.

The controller 160 enters electric signals outputted from the photo diodes 141, 143a, 143b, and controls the pumping light output from the laser diodes 152a, 152b on the basis of these electric signals.

The Raman amplification fiber 130 constitutes a part of the transmission line through which the signal light outputted from the optical isolator 121 propagates, and Raman-amplifying the signal light by being supplied with pumping light from the optical coupler 112. The Raman-amplified signal light is outputted from the Raman amplification fiber 130 to the optical coupler 112. The Raman amplification fiber 130 is a transmission medium which is provided between the signal light source 10 and the transmission line fiber 30, which compensates for the positive chirp of the signal light outputted from the signal light source 10 while Raman-amplifying the signal, and which is a high-nonlinearity fiber having a negative chromatic dispersion at the wavelength of the signal light and generating a self-phase modulation intentionally.

The Raman amplifier 20 acts as follows. Namely, the pumping light components outputted from the laser diodes 152a, 152b are multiplexed by the optical multiplexer 150. The multiplexed light (pumping light) from the optical multiplexer 150 is supplied to the Raman amplification fiber 130 through the backward end of the Raman amplification fiber 130 via the optical coupler 112. The signal light inputted through the signal input port 101 reaches the Raman amplification fiber 130 via the optical coupler 112 and the optical isolator 121, and then is Raman-amplified in the Raman amplification fiber 130. The Raman-amplified signal light is outputted from the signal output port 102 after passing through the optical coupler 112, the optical isolator 112 and the optical coupler 113.

The part of the signal light inputted through the signal input port 101 is introduced to the photo diode 141 after being divided by the optical coupler 111. The photo diode 141 outputs an electric signal depending on the receiving power of the divided light to the controller 160. On the other hand, the part of the signal light outputted from the signal output port 102 is introduced to the photo diode 143a after being divided by the optical coupler 113. The photo diode 143a outputs an electric signal depending on a receiving power of the divided light to the controller 160. In addition, the part of the light (return light) from the signal output port 102 to the optical isolator 122 is introduced to the photo diode 143b after being divided by the optical coupler 113. The photo diode 143b outputs an electric signal depending on a receiving power of the reflected light to the controller 160.

The controller 160 monitors the input signal light power on the basis of the electric signal outputted from the photo diode 141, monitors the output signal light power on the basis of the electric signal outputted from the photo diode 143a, and monitors the return light power on the basis of the electric signal outputted from the photo diode 143b. The reflected light power expresses whether the signal output port 102 is set in a connection state or an opening state. And, at the case that the input signal light power is a predetermined threshold value or less, or at the case that the return light power is a predetermined threshold value or more, the controller 160 reduces the pumping light power of the laser diode 152a, 152b or stops these laser diodes 152a, 152b. In addition, the controller 160, on the basis of a ratio between the output signal light power and the input signal light power, adjusts the pumping light power of the laser diodes 152a, 152b so as for a Raman amplification gain to become a desired value.

Further, in the entire optical transmission system 1 shown in Fig. 1, the signal light form the signal light source 10 propagates through the transmission line fiber 30 and reaches the optical receiver 40, after being Raman-amplified by the lumped Raman amplifier 20.

In particular, in the optical transmission system 1, the signal light outputted from the signal light sources 10 has a positive chirp, and, on the other hand, the Raman amplification fiber 130 included in the lumped Raman amplifier 20 has a negative chromatic dispersion at the wavelength of the signal light. In addition, the Raman amplification fiber 130 is a high-nonlinearity fiber Raman-amplifying the signal light by using stimulated Raman scattering (SRS) as a kind of nonlinear optical effect, and thereby a self-phase modulation can be intentionally generated. Accordingly, the positive chirp of the signal light outputted from the signal light source 10 is compensated by the negative chromatic dispersion of the Raman amplification fiber 130 and is also compensated by the self-phase modulation in the Raman amplification fiber 130. As a result, the optical transmission system 1 becomes to have superior transmission characteristics.

An applicable condition to be required as a Raman amplification fiber 130 will be expressed as follows. Namely, the phase shift amount $\Phi_{LRA}$ of the signal light in the Raman amplification fiber 130 is preferably 1/2 or more of the phase shift amount $\Phi_T$ of the signal light in the transmission line fiber 30. In this case, the compensation effect for the positive chirp of the signal light, to which the self-phase modulation in the Raman amplification fiber 130 contributes, becomes large.

Here, the phase shift amount $\Phi$ is expressed in the following formula (1).

$$\Phi = \frac{2\pi}{\lambda}\int_0^L \frac{n_2(z)}{A_{eff}(z)} P_{signal}(z)dz \qquad \cdots (1)$$

In the above formula (1), z is a variable expressing a position along a longitudinal direction of the optical fiber (having a length L), $n_2(z)$ is a nonlinear refractive index of the optical fiber at the position of the optical fiber is z, and $A_{eff}(z)$ is an effective area of the optical fiber at the position z with respect to the signal light with a wavelength $\lambda$, and $P_{signal}(z)$ is the power of the signal light power in the optical fiber at the position z.

Furthermore, the nonlinear coefficient $(2\pi/\lambda)\cdot(n_2/A_{eff})$ of the Raman amplification fiber 130, defined by the nonlinear refractive index $n_2$ and the effective area $A_{eff}$ at the signal light wavelength $\lambda$ is so good that it is large, and it is preferably, for example, 6.9 (1/W/km) or more, further preferably 12.2 (1/W/km) or more. In addition, a length of the Raman amplification 130 used per one Raman amplifier is preferably 5 km or less. This is to prevent a deterioration of transmission quality due to double Reilly scattering caused in the Raman amplification fiber 130. The nonlinear refractive index $n_2$ is preferably $3.5 \times 10^{-20}$ $m^2/W$ or more, more preferably $4.5 \times 10^{-20}$ $m^2/W$ or more. The effective area $A_{eff}$ is preferably 30 $\mu m^2$ or less, more preferably 15 $\mu m^2$ or less. In this case, a nonlinearity of the Raman amplification 130 becomes large, and thereby a compensation effect for the positive chirp of the signal light, to which the self-phase modulation in the Raman amplification fiber 130 contributes, becomes large.

The Raman amplification fiber 130 preferably has a transmission loss of 0.7 dB/km or less at the wavelength of 1550 nm. On the other hand, the Raman amplification fiber 130 preferably has a transmission loss whose increase, to which the OH-absorption near the wavelength of 1390 nm contributes, is 0.5 dB/km or less. In these cases, the transmission loss of the Raman amplification fiber 130 at both wavelengths of the signal light and the pumping light, and therefore Raman amplification with high efficiency becomes possible.

Furthermore, the Raman amplification fiber 130 has a chromatic dispersion of -20 ps/nm/km or less, more preferably -60 ps/nm/km or less at the wavelength of the signal light. In this case, a compensation effect for the positive chirp of the signal light, to which the negative chromatic dispersion of the Raman amplification fiber 130 contributes, becomes large. In addition, the Raman amplification fiber 130 can compensate for can effectively compensate for the positive chromatic dispersion of the transmission line fiber 30.

The wavelength spacing of the signal channels included in the signal light is 10 nm or more, and the Raman amplification fiber 130 may have a chromatic dispersion of -10 ps/nm/km or less at the wavelength of the signal light. In this case, the generations of four-wave mixing and cross-phase modulation (XPM) as nonlinear effects are effectively suppressed, and thereby superior transmission characteristics can be obtained over a broader wavelength band.

The connection loss between the Raman amplification fiber 130 and another optical fiber is preferably 0.5 dB or less, and then, the effective Raman amplification can be achieved.

In addition, as the phase shift amount $\Phi_{LRA}$ in the lumped Raman amplifier 20 is large, the transmission characteristics for the signal light can be improved. However, an amplification gain in the lumped Raman amplifier 20 is preferably set such that Stimulated Raman Scattering (SRS) does not occur within the lumped Raman amplifier 20 and at the entrance end of the transmission line fiber 30.

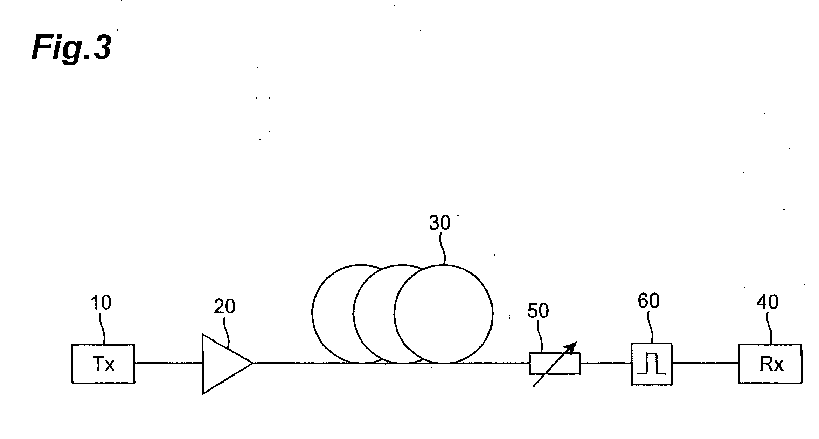

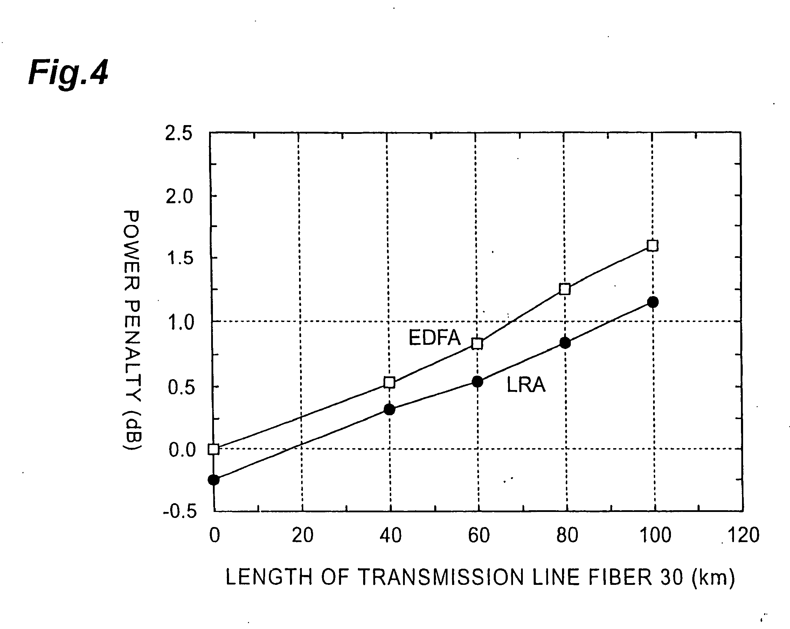

Fig. 3 is a view showing a constitution of an experimental system that has been prepared to confirm an effect of the optical transmission system according to the present invention. Fig. 4 is a graph showing an experiment result with an experimental system shown in Fig. 3. The experimental system shown in Fig. 3 is assumed as both of an optical transmission system according to the present invention with a lumped Raman amplifier and a comparative optical transmission system with an Er-doped optical fiber amplifier. These experimental systems have a structure that a variable optical attenuator 50 and an optical filter 60 is further inserted between the transmission line fiber 30 and the optical receiver 40 in the optical transmission system 1 shown in Fig. 1, except an optical amplifier. In these experimental systems, a bit rate of the signal light outputted from the signal light source 10 is 2.5 Gbps, and its wavelength is 1550 nm. The power of the signal light outputted form the optical amplifier is 10 dBm. The transmission line fiber 30 is a standard single mode optical fiber (SMF) having a zero-dispersion wavelength near a wavelength of 1.3 $\mu$m, and its length is 0 km, 40 km, 60 km, 80 km, 100 km. The graph G410 indicates a power penalty of the comparative optical transmission system (comprising an Er-doped optical fiber amplifier) when varying the length of the transmission line fiber 30, and the graph G420 indicates a power penalty of the optical transmission system according to the present invention (comprising a lumped Raman amplifier) when varying the length of the transmission line fiber 30.

As can be seen from Fig. 4, in both of the experimental system having the lumped Raman amplifier (LRA) and the experimental system having the Er-doped optical fiber amplifier (EDFA), a power penalty turns worse as the length of the transmission line fiber 30 is long. However, as compared with the Er-doped optical fiber amplifier (EDFA), the lumped Raman amplifier (LRA) in which a self-phase modulation easily occurs in the Raman amplification fiber is superior in a power penalty.

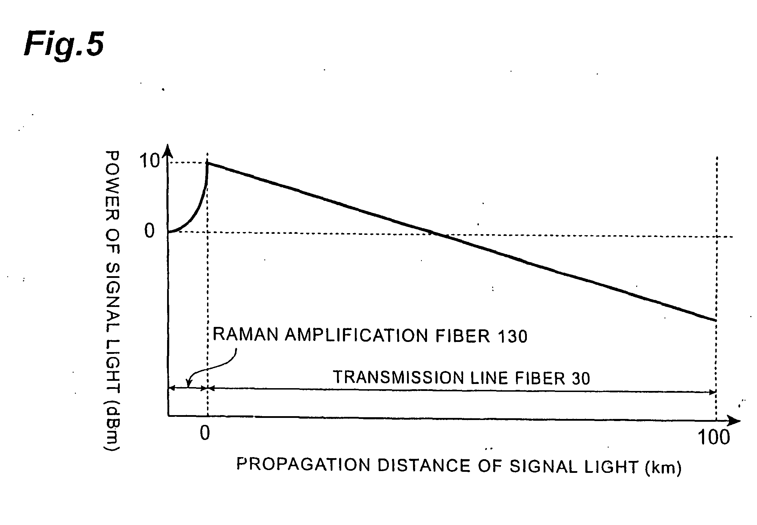

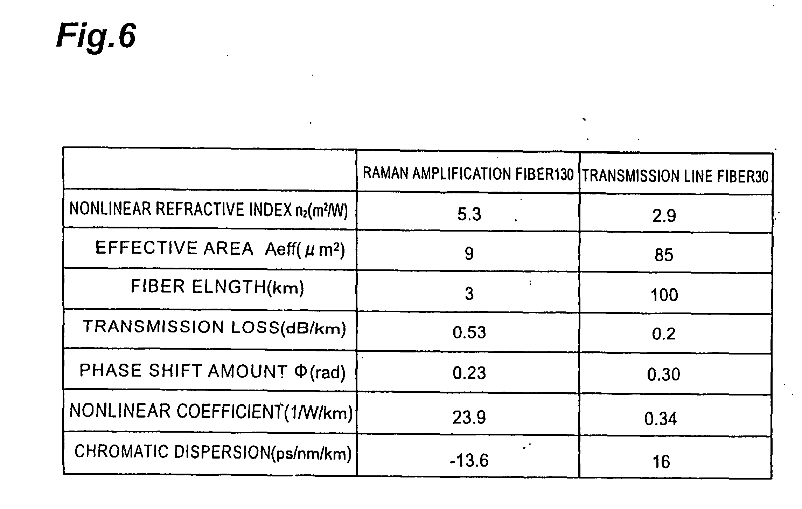

Fig. 5 is a graph showing a distribution of signal light power $P_{signal}$ on a signal light transmission path in the optical transmission system shown in Fig. 1. In addition, Fig. 6 is a table listing specifications of the Raman amplification fiber 130 and the transmission line fiber 30 included in the optical transmission system shown in Fig. 1. Here, the prepared Raman amplification fiber 130 has a nonlinear coefficient $(2\pi/\lambda) \cdot (n_2/A_{eff})$ of 23.9 (1/W/km), a length of 3 (km), a transmission loss of 0.53 (dB/km) at a wavelength of 1550 nm, and a chromatic dispersion of - 13.6 (ps/nm/km) at the wavelength of 1550 nm. On the other hand, the prepared transmission line fiber 30 has a nonlinear coefficient $(2\pi/\lambda) \cdot (n_2/A_{eff})$ of 0.34 (1/W/km), a length of 100 (km), a transmission loss of 0.2 (dB/km) at a wavelength of 1550 nm, and a chromatic dispersion of 16 (ps/nm/km) at the wavelength of 1550 nm. The power of the signal light outputted from the signal light source 10 is 0 dBm, and the power of the signal light outputted from the lumped Raman amplifier 20 is 10 dBm. At this time, the phase shift amount $\Phi_{LRA}$ of the signal light in the Raman amplification fiber 130 is 0.23 rad, and the phase shift amount $\Phi_T$ of the signal light in the transmission line fiber 30 is 0.30 rad. In this way, the phase shift amount $\Phi_{LRA}$ of the signal light in the Raman amplification fiber 130 is 1/2 or more of the phase shift amount $\Phi_T$ of the signal light in the transmission line fiber 30.

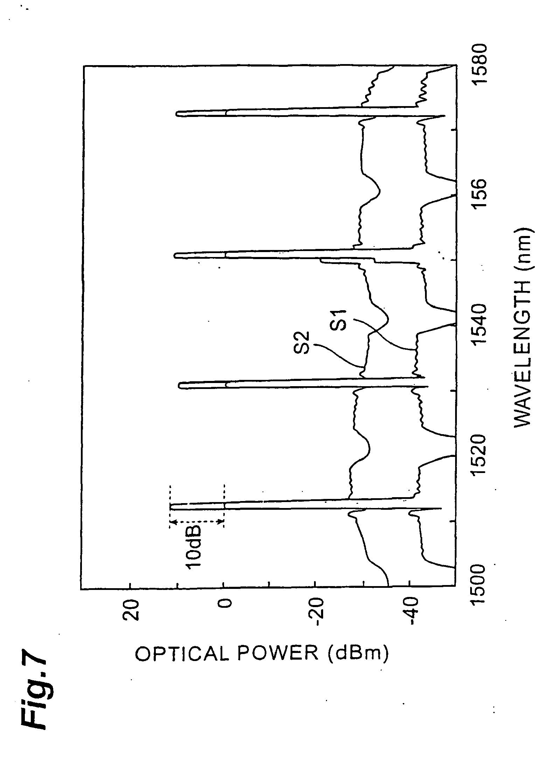

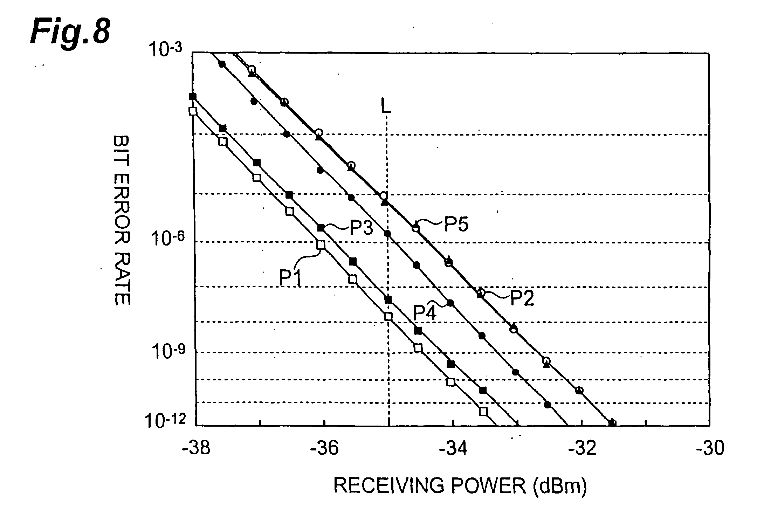

Fig. 7 shows an inputted light spectrum S1 and an outputted light spectrum S2 of the lumped Raman amplifier 20 included in the optical transmission system shown in Fig. 1. In addition, Fig. 8 is a graph in which the relationships between a bit error rate (BER) and a receiving power (dBm) are plotted, regarding to the signal light with a wavelength of 1550 nm in various transmission lines. The signal light to be outputted is a four-channel signal light with a bit rate of 2.5 Gbps, and the wavelength of each signal channel is 1511 nm, 1531 nm, 1551 nm, 1571 nm. Furthermore, in Fig. 8, the plot data P1 indicates a relationship between a bit rate and a receiving power of the signal light (Back to Back) after being outputted from the signal light source 10, the plot date P2 indicates a relationship between a bit rate and a receiving power of the signal light (SMF 100km without FRA) after propagating through the transmission line fiber 30 with a length 0f 100 km without passing through the lumped Raman amplifier 20, the plot data P3 indicates a relationship between a bit rate and a receiving power of the signal light (Output of FRA) after being outputted from the lumped Raman amplifier 20, the plot data P4 indicates a relationship between a bit rate and a receiving power of the signal light (SMF 100 km with FRA) after propagating through the transmission line fiber 30 with a length of 100 km via the lumped Raman amplifier 20, and the plot data P5 indicates a relationship between a bit rate and a receiving power of the signal light (SMF 150 km with FRA) after propagating through the transmission line fiber 30 with a length of 150 km via the lumped Raman amplifier 20. Further, the line L in Fig. 8 indicates a receiving limit for the signal having propagated through a single-mode optical fiber with a length of 150 km without passing through the Raman amplifier.

As can be seen from Fig. 8, when the Raman amplification fiber 130 has a negative chromatic dispersion at the wavelength of the signal light, transmission characteristics are improved. In addition, by the effect due to the self-phase modulation in the Raman amplification fiber 130 (high-nonlinearity fiber) included n the lumped Raman amplifier 20, a loss budget is also expanded together with the improvement of the transmission characteristics, as compared with the case that a Raman amplifier is not provided. Furthermore, the effects of four-wave mixing and influence of mutual phase abnormality are not seen.

The present invention is not limited to the above-mentioned embodiments, and can be modified as various applications. For example, the above-mentioned embodiment constitutes a backward pumping structure supplying pumping light to the back end (signal emission terminal) of the Raman amplification fiber, but a forward pumping structure supplying pumping light to the front end (signal entrance terminal) of the Raman amplification fiber can be applied and a bidirectional pumping structure can be also applied.

## Industrial Applicability

As described above, in accordance with the present invention, the positive chirp of the signal light outputted from the signal light source is compensated by the high-nonlinearity fiber as a Raman amplification fiber, and is also compensated by the self-phase modulation in the high-nonlinearity fiber. By this, the optical transmission system according to the present invention can obtain superior transmission characteristics over a broader wavelength band.

The optical transmission system according to the present invention can be applied to CWDM signal transmission with wider signal channel spacing because the positive chirp of the signal light outputted from the signal light source can be sufficiently compensated.

## Claims

**1.** An optical transmission system comprising:

a) a signal light source (10) outputting signal light;
b) an optical fiber transmission line (30) through which the signal light propagates; and
c) a lumped Raman amplifier (20) provided between said signal light source (10) and said optical fiber transmission line (30), and Raman-amplifying the signal light outputted from said signal light source (10), said lumped Raman amplifier (20) including a high-nonlinearity fiber (130) having a negative chromatic dispersion at a wavelength of the signal light and a nonlinear coefficient $(2\pi/\lambda) \cdot (n_2/A_{eff})$ of 6.9 (1/W/km) or more which is defined by a nonlinear refractive index $n_2$ and an effective area $A_{eff}$ at a wavelength of $\lambda$; **characterized in that**
d) said signal light source (10) outputs said signal light with a positive chirp;
e) a phase shift amount $\Phi_{LRA}$ of the signal light in said high-nonlinearity fiber (130) is ½ or more of a phase shift amount $\Phi_T$ of the signal light in said optical fiber transmission line (30).

**2.** An optical transmission system according to claim 1, wherein the nonlinear coefficient $(2\pi/\lambda) \cdot (n_2/A_{eff})$ of said high-nonlinearity fiber (130) is 12.2 (1/W/km) or more.

**3.** An optical transmission system according to claim 1, wherein said high-nonlinearity fiber (130) has a transmission loss of 0.7 dB or less at a wavelength of 1500 nm.

**4.** An optical transmission system according to claim 1, wherein said high-nonlinearity fiber (130) has a transmission loss whose increase, to which OH-absorption near a wavelength of 1390 nm contributes, is 0.5 dB/km or less.

**5.** An optical transmission system according to claim 1, wherein said high-nonlinearity fiber (130) has a chromatic dispersion of -20 ps/nm/km or less at the wavelength of the signal light.

**6.** An optical transmission system according to claim 1, wherein the signal light includes a plurality of signal channels having a wavelength spacing of 10 nm or more, and said high-nonlinearity fiber (130) has a chromatic dispersion of -10 ps/nm/km or less at the wavelength of the signal light.

## Patentansprüche

**1.** Ein optisches Übertragungs-System, umfassend:

a) eine Signal-Lichtquelle (10), ausgebend Signal-Licht;

b) eine optische Faser-Übertragungsleitung (30), durch welche sich das Signal-Licht ausbreitet; und
c) einen konzentrierten Raman-Verstärker (20), vorgesehen zwischen der Signal-Lichtquelle (10) und der optischen Faser-Übertragungsleitung (30) und Raman-verstärkend das von der Signal-Lichtquelle (10) ausgegebene Signal-Licht, der konzentrierte Raman-Verstärker (20) einschließend eine hoch-nicht-lineare Faser (130), welche bei einer Wellenlänge des Signal-Lichts eine negative chromatischen Dispersion aufweist und einen nicht-linearen Koeffizienten $(2_{\pi/\lambda}) \cdot (n_2/A_{eff})$ von 6,9 (1/W/km) oder mehr, definiert durch einen nicht-linearen Brechungsindex $n_2$ und eine effektive Fläche $A_{eff}$ bei einer Wellenlänge $\lambda$;
**gekennzeichnet dadurch, dass**
d) die Signal-Lichtquelle (10) das Signal-Licht mit einem positiven Chirp (sich zeitlich verändernde Frequenz) ausgibt;
e) ein Phasenverschiebungs-Betrag $\Phi_{LRA}$ des Signal-Lichts in der hoch-nicht-linearen Faser (130) ½ oder mehr eines Phasenverschiebungs-Betrags $\Phi_T$ des Signal-Lichts in der optischen Faser-Übertragungsleitung (30) ist.

**2.** Ein optisches Faser-Übertragungs-System nach Anspruch 1, wobei der nicht-lineare Koeffizient $(2\pi/\lambda) \cdot (n_2/A_{eff})$ der hoch-nicht-linearen Faser (130) gleich 12,2 (1/W/km) oder mehr ist.

**3.** Ein optisches Übertragungs-System nach Anspruch 1, wobei die hoch-nicht-lineare Faser (130) bei einer Wellenlänge von 1500 nm einen Übertragungsverlust von 0,7 dB oder weniger aufweist.

**4.** Ein optisches Übertragungs-System nach Anspruch 1, wobei die hoch-nicht-lineare Faser (130) einen Übertragungsverlust aufweist, dessen Anwachsen, zu welchem OH-Absorption nahe einer Wellenlänge von 1390 nm beiträgt, 0,5 dB/km oder weniger ist.

**5.** Ein optisches Übertragungs-System nach Anspruch 1, wobei die hoch-nicht-lineare Faser (130) bei der Wellenlänge des Signal-Lichts eine chromatische Dispersion von -20 ps/nm/km oder weniger aufweist.

**6.** Ein optisches Übertragungs-System nach Anspruch 1, wobei das Signal-Licht eine Vielzahl von Signal-Kanälen, aufweisend einen Wellenlängen-Abstand von 10 nm oder mehr, einschließt und die hoch-nicht-lineare Faser (130) bei der Wellenlänge des Signal-Lichts eine chromatische Dispersion von -10 ps/nm/km oder weniger aufweist.

## Revendications

**1.** Système de transmission optique comprenant :

a) une source de lumière de signal (10) fournissant en sortie une lumière de signal,
b) une ligne de transmission à fibre optique (30) à travers laquelle se propage la lumière de signal, et
c) un amplificateur à effet Raman à constantes localisées (20) disposé entre ladite source de lumière de signal (10) et ladite ligne de transmission à fibre optique (30), et amplifiant par effet Raman la lumière de signal fournie en sortie de ladite source de lumière de signal (10), ledit amplificateur à effet Raman à constantes localisées (20) comprenant une fibre présentant une non-linéarité élevée (130) ayant une dispersion chromatique négative à une longueur d'onde de la lumière de signal et un coefficient non linéaire $(2\pi/\lambda) \cdot (n_2/A_{eff})$ de 6,9 (1/W/km) ou plus qui est défini par un indice de réfraction non linéaire $n_2$ et une aire effective $A_{eff}$ à une longueur d'onde de $\lambda$, **caractérisé en ce que**
d) ladite source de lumière de signal (10) fournit en sortie ladite lumière de signal avec une fluctuation de fréquence positive,
e) une valeur de déphasage $\Phi_{LRA}$ de la lumière de signal dans ladite fibre présentant une non-linéarité élevée (130) est de 1/2 ou plus d'une valeur de déphasage $\Phi_T$ de la lumière de signal dans ladite ligne de transmission à fibre optique (30).

**2.** Système de transmission optique selon la revendication 1, dans lequel le coefficient de non-linéarité $(2\pi/\lambda) \cdot (n_2/A_{eff})$ de ladite fibre présentant une non-linéarité élevée (130) est de 12,2 (1/W/km) ou plus.

**3.** Système de transmission optique selon la revendication 1, dans lequel ladite fibre présentant une non-linéarité élevée (130) a une perte de transmission de 0,7 dB ou moins à une longueur d'onde de 1 500 nm.

**4.** Système de transmission optique selon la revendication 1, dans lequel ladite fibre présentant une non-linéarité élevée (130) a une perte de transmission dont l'augmentation, à laquelle l'absorption OH près d'une longueur d'onde de 1 390 nm contribue, est de 0,5 dB/km ou moins.

**5.** Système de transmission optique selon la revendication 1, dans lequel ladite fibre présentant une non-linéarité élevée (130) présente une dispersion chromatique de - 20 ps/nm/km ou moins à la longueur d'onde de la lumière de signal.

**6.** Système de transmission optique selon la revendication 1, dans lequel la lumière de signal comprend une pluralité de canaux de signaux ayant un espacement de longueur d'onde de 10 nm ou plus, et ladite fibre présentant une non-linéarité élevée (130) présente une dispersion chromatique de -10 ps/nm/km ou moins à la longueur d'onde de la lumière de signal.

Fig.1
Tx
10
20
1
30
40
Rx

20
101
102
111
112
113
121
122
130
141
143a
143b
150
152a
152b
CONTROLLER
160

Fig.2

10
Tx
20
30
50
60
40
Rx

*Fig.3*

Fig.4

POWER PENALTY (dB)
2.5
2.0
1.5
1.0
0.5
0.0
-0.5
LENGTH OF TRANSMISSION LINE FIBER 30 (km)
0
20
40
60
80
100
120
EDFA
LRA

*Fig.5*

POWER OF SIGNAL LIGHT (dBm)
10
0
RAMAN AMPLIFICATION FIBER 130
TRANSMISSION LINE FIBER 30
0
100
PROPAGATION DISTANCE OF SIGNAL LIGHT (km)

*Fig.6*

| | RAMAN AMPLIFICATION FIBER130 | TRANSMISSION LINE FIBER30 |
|---|---|---|
| NONLINEAR REFRACTIVE INDEX $n_2$($m^2$/W) | 5.3 | 2.9 |
| EFFECTIVE AREA Aeff($\mu m^2$) | 9 | 85 |
| FIBER ELNGTH(km) | 3 | 100 |
| TRANSMISSION LOSS(dB/km) | 0.53 | 0.2 |
| PHASE SHIFT AMOUNT $\Phi$(rad) | 0.23 | 0.30 |
| NONLINEAR COEFFICIENT(1/W/km) | 23.9 | 0.34 |
| CHROMATIC DISPERSION(ps/nm/km) | -13.6 | 16 |

OPTICAL POWER (dBm)
20
0
-20
-40
10dB
S2
S1
1500
1520
1540
156
1580
WAVELENGTH (nm)

*Fig.7*

*Fig.8*

BIT ERROR RATE
10-3
10-6
10-9
10-12
RECEIVING POWER (dBm)
-38
-36
-34
-32
-30
P1
P2
P3
P4
P5
L

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2002076182 A1
- US 5587827 A


### Non-patent literature cited in the description


- **J. JEONG et al.** *IEEE Photonics Technology Letters,* 1998, vol. 10 (9